# EUROPEAN PATENT APPLICATION

(11) **EP 1 209 636 A2**
(43) Date of publication of application: **29.05.2002**
(21) Application number: 01307917.3
(22) Date of filing: 18.09.2001
(51) Int. Cl.: G07F 7/10, G07F 19/00, G09B 21/00

(54) **Self-service terminal**

(30) Priority: 24.11.2000 GB 0028712
(71) Applicant: NCR INTERNATIONAL INC., Dayton, Ohio 45479 (US)
(72) Inventor: Holmes, Anthony, Dundee DD3 8NY (GB); Paton, Grant Charles, Dundee DD4 7QG (GB)
(74) Representative: Williamson, Brian

(57) **Abstract**

A self-service terminal (10) having an improved user interface (16) is described. The user interface (16) comprises a plurality of user interface elements (18,20,22,24,26,28,29). At least one of the user interface elements has means (60) for detecting a user's hand in the vicinity of that element, and means (42,29) for informing the user about that element. The detecting means (60) may comprise a proximity sensor. The informing means (42,29) may comprise a controller (42) executing a control program (52) that detects which user interface element the user's hand (32b) is in the vicinity of, selects an audio file associated with that element, and plays the audio file to the user (32) via a loudspeaker (29) in the user interface (16).

## Description

The present invention relates to a self-service terminal (SST) having an improved user interface. In particular, the invention relates to an automated teller machine (ATM).

User interfaces on self-service terminals such as ATMs are designed to allow users to enter complex transactions in a simple manner. However, user interfaces are typically designed for people who have relatively good eyesight: users who are visually impaired have difficulty using ATMs because it is difficult for them to determine which user interface element (for example, the keypad, card reader, printer slot, and such like) is being used, and where that element is located on the user interface. As more functionality is added to ATMs, the physical space occupied by the user interface increases; this makes it even more difficult for visually impaired users to locate a particular user interface element to interact with.

It is an object of the present invention to obviate or mitigate the above disadvantage or other disadvantages associated with self-service terminals.

According to a first aspect of the present invention there is provided a self-service terminal having a user interface comprising a plurality of user interface elements, characterised in that at least one user interface element has means for detecting a user's hand in the vicinity of that element, and means for informing the user about that element.

The informing means may describe a user interface element by reference to a type of module. The module may be that user interface element (for example, a keypad, a display, and such like); or may be a module associated with that user interface element (for example, a card reader module is associated with a card entry/exit slot, a receipt printer is associated with a receipt slot).

Where an element provides multiple sub-functions, for example a keypad or an FDK (function display key) module, the detecting means may detect a user's finger in the vicinity of a sub-element, and the informing means may inform the user about a function performed by that sub-element (for example, the detecting means may detect a user's finger in the vicinity of the "1" key, the "Cancel" key, the "Enter" key, or some other key on the keypad).

In some embodiments, the informing means may not inform the user about the function of a sub-element if there is a risk in disclosing a user's personal data; for example, if a user intends to enter a personal identification number (PIN), the informing means may not inform the user, or may only inform the user about one numeral key so that the user is assisted in navigating the keypad but the user's PIN is not disclosed to passers-by.

Preferably, the detecting means comprises a proximity sensor. However, any other convenient means for detecting a user's hand may be used. For example, the detecting means may comprise an emitter and detector arrangement for detecting emissions from the emitter that have been reflected by the user's hand.

Proximity sensors are well known, and will not be described in detail herein. Examples of sensors suitable for use in the present invention are available from Pepperl and Fuchs, Postfach 31 04 40, D-6800, Mannheim 31, Germany. Conveniently, the proximity sensor is a capacitive sensor, or alternatively may be an inductive sensor.

Preferably, the informing means comprises a loudspeaker actuated by a controller. The controller may include pre-recorded sound files or clips that are played through the loudspeaker. Alternatively, the controller may include a text to speech program and text files associated with the user interface elements.

Alternatively, or additionally, the informing means comprises a controller for displaying large text on a display.

Preferably, the controller used in the informing means also controls the operation of the terminal.

By virtue of this aspect of the present invention, a user is able to move his/her hand to the vicinity of a user interface element, and be informed about the function of that element. Thus, a user is able to determine the layout of a terminal by moving his/her hand slowly over the user interface of that terminal.

Where an element has sub-elements that change function during a transaction (for example, an FDK may change function depending on a previous selection by the user) the user may discover the current function provided by that sub-element by moving his/her hand to the vicinity of the sub-element.

According to a second aspect of the present invention there is provided a method of informing a user of a self-service terminal about a user interface element included in that terminal, the method comprising the steps of:
detecting a user's hand in the vicinity of a user interface element; and
informing the user about that user interface element.

The informing step may include the sub-steps of:
detecting which user interface element the user's hand is in the vicinity of; selecting an audio file associated with that element; and playing the audio file.

The audio file may be played through a loudspeaker or audio jack. The audio jack has the advantage of increased privacy, which is particularly important when financial transactions are being executed at a public access terminal such as an ATM.

In one embodiment, a user may have to touch a user interface element before the informing means informs the user about the function of that element.

These and other aspects of the present invention will be apparent from the following specific description, given by way of example, with reference to the accompanying drawings, in which:
Fig 1 is a schematic diagram of a self-service terminal according to one embodiment of the present invention;
Fig 2 is a block diagram of the terminal of Fig 1, showing internal modules of the terminal; and
Fig 3 is a schematic diagram of two user interface elements (an FDK unit overlying a display) of the terminal of Fig 1.

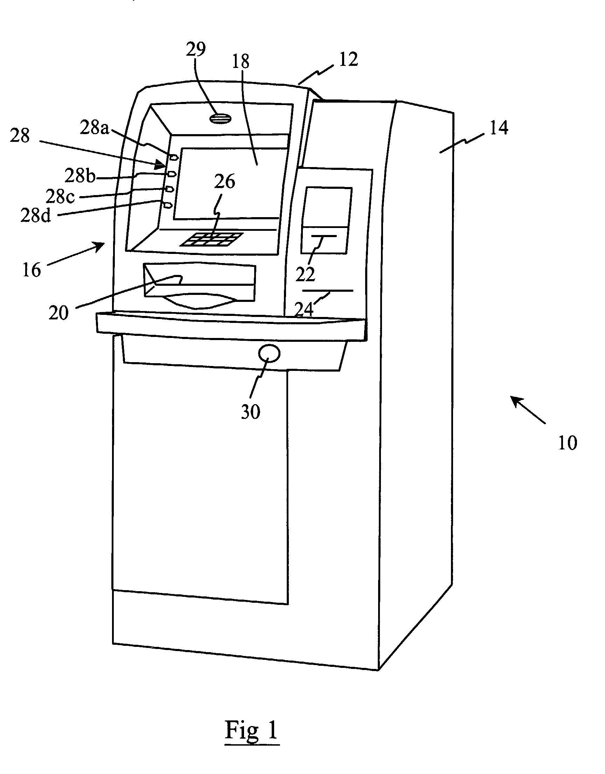

Referring to Fig 1, which shows a perspective view of an ATM 10 according to one embodiment of the invention, the ATM 10 comprises a chassis (not shown) for supporting a fascia 12, exterior panels 14 and internal ATM modules (not shown in Fig 1). The fascia 12 includes a user interface 16 incorporating a plurality of user interface elements in the form of modules and slots. When the fascia 12 engages fully with the chassis and panels 14 the slots align with ATM modules located within the ATM 10.

The user interface 16 comprises the following user interface elements: a display 18, a cash dispense slot 20, a card entry/exit slot 22 (herein referred to as a card entry slot), a receipt slot 24, an encrypting keypad 26, a function display key module (FDKs) 28 associated with the display 18, and a loudspeaker 29.

The FDK module user interface element 28 comprises eight FDK sub-elements, labelled 28a to 28h (for clarity, only FDKs 28a to 28d are shown in Fig 1).

The fascia 12 has a lock mechanism 30 for securing the fascia 12 to and for releasing the fascia 12 from the chassis and panels 14.

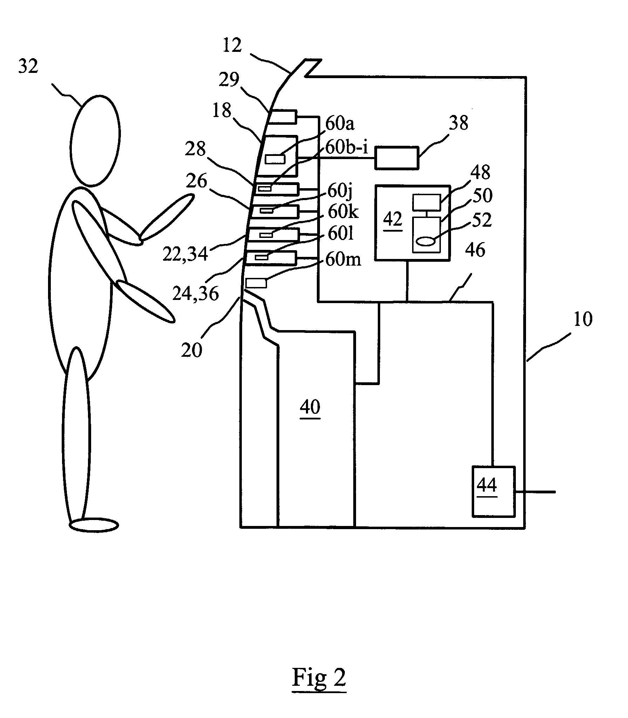

Reference is now made to Fig 2, which illustrates a user (customer) 32 operating the ATM 10, and also illustrates the ATM internal modules in block diagram form.

The ATM 10 includes the following internal modules: a magnetic card reader/writer (MCRW) module 34 that aligns with the card entry slot 22, a printer module 36 that aligns with the receipt slot 24, an internal journal printer module 38, a cash dispenser module 40 that aligns with the cash dispense slot 20, an ATM controller module 42 for controlling the operation of the various modules, and a network connection module 44 for communicating with a remote transaction host (not shown). All of the modules within the ATM 12 are interconnected by an internal bus 46 for securely conveying data.

Although the display 18 may be considered as an internal ATM module because it is mounted within the ATM and is not coupled to the fascia 12, it has been described herein as part of the user interface 16 on the fascia 12 because the display 18 protrudes through a large aperture in the fascia 12 so that it appears as part of the fascia 12.

The ATM controller 42 includes a processor 48 and associated memory 50, and executes an ATM control program 52. The control program 52 includes sound files (not shown), each file containing a spoken description of a user interface element (for example, "card reader slot", "display") or the function of a sub-element (for example, "withdraw ten pounds").

The ATM 10 also includes means for detecting a user's hand in the vicinity of a user interface element in the form of a plurality of proximity sensors 60 located behind the fascia 12. Each sensor 60 is a capacitive proximity sensor, of the type available from Pepperl and Fuchs, Postfach 31 04 40, D-6800, Mannheim 31, Germany, and is located adjacent or within a user interface element or sub-element.

Sensor 60a is located adjacent the display 18; each of sensors 60b to 60i is located adjacent a respective one of the eight FDKs 28a to 28h in FDK module 28; sensor 60j is located adjacent keypad 26; sensor 60k is located adjacent card entry slot 22; sensor 601 is located adjacent printer slot 24; and sensor 60m is located adjacent cash dispense slot 20.

Each sensor 60 is coupled to the ATM controller module 42 so that the ATM controller 42 can determine which sensor 60 detects proximity of a user's hand, thereby enabling the ATM controller 42 to determine the approximate position of the user's hand.

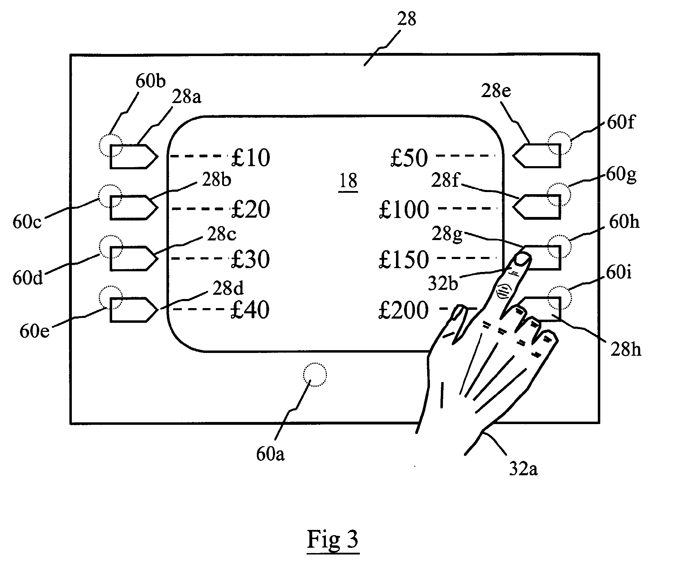

Reference is now made to Fig 3, which is a block diagram of the FDK module 28 overlying the display 18. In use, a visually impaired user 32 approaches the ATM 14, and locates the card entry slot 22 by moving his hand 32a, and particularly his finger 32b, slowly across the fascia 12.

When the user's finger 32b approaches a sensor 60, in this example the receipt slot sensor 601, the sensor 601 detects the user's finger 32b and sends a signal to the ATM controller 42. The ATM controller 42 receives this signal, and the ATM control program 52 determines which sensor 601 detected the user's finger 32b, selects an audio file associated with that sensor 601 (in this example a receipt slot file), and plays the file through the loudspeaker 29. The user 32 hears the audio file which has a person saying "Receipt slot". Thus, the user knows that his hand 32a is adjacent the receipt slot 24.

The user 32 can then move his finger upwards to locate the card entry slot 22. When the user's finger 32b is adjacent the card entry slot sensor 60k, then the user hears the words "Card reader slot" through loudspeaker 29 because the ATM control program 52 has detected sensor 60k being active and has selected the audio file for the card reader slot 22.

The user 32 then enters his card into slot 22, and locates the keypad 26 by moving his finger back across the fascia 12. When the user 32 has located the keypad 26, the user can deduce the layout of the keypad 26 because the numeric keys are located in a standard arrangement, the top left corner of the keypad having the numeral "1".

Once the user has entered his PIN, the display 18 presents a screen to the user 32 providing the user with transaction options to select using an FDK 28a to 28h.

The term "screen" is used herein to denote the graphics, text, controls (such as menu options), and such like, that are presented on the display; the term "screen" as used herein does not refer to the hardware (that is, the display) that presents the graphics, text, controls, and such like.

The user can locate the FDK module 28 by moving his hand upwards until his finger 32b is in the vicinity of one of the FDK sensors 60b to 60i. Each FDK 28a to 28h has an associated audio file for each stage in a transaction. When the user 32 places his finger 32b in the vicinity of one of the FDKs (for example FDK 28g, as shown in Fig 3), then the ATM control program 52 determines what screen is being presented by the display 18, so that the program 52 can select the appropriate audio file for playing to the user

The user 32 continues entering the transaction until the transaction has been completed. The user 32 then removes his card and any cash and/or receipt he has requested before leaving the ATM 10.

It will now be appreciated that the above embodiment has the advantage that a user is able to obtain information about a user interface element (such as the card reader slot) or sub-element (such as a particular FDK in the FDK module) during a transaction, thereby improving usability for a visually impaired user.

Various modifications may be made to the above described embodiment within the scope of the invention, for example, in other embodiments different user interface elements and/or sub-elements may be used to those described above.

In other embodiments, a sensor 60 may be indirectly coupled to the ATM controller 42 (for example, via a module associated with that sensor); or coupled (directly or indirectly) to a dedicated controller.

In other embodiments, in addition to or instead of the loudspeaker 29, the user interface 16 may include a jack for receiving headphones so that the user can privately listen to any instructions from the ATM 10. In other embodiments, the keypad 26 may include sensors adjacent one or more of the numeral keys. In other embodiments, the keypad may have a sensor adjacent the enter key and a sensor adjacent the cancel key, so that once a user has entered his/her PIN, he/she can determine what key to press to proceed with a transaction.

In other embodiments, a keyboard or keypad may be provided that has sensors adjacent each key. This keypad may be used to provide the functions of an FDK module so that a user can use the keypad to select functions that vary depending on the transaction being executed and/or the stage of the transaction. The keyboard or keypad may be non-secure (for example, not used for entering a PIN).

In other embodiments, a keypad may be provided, whereby the terminal allows a user to depress a key once, and in response to the single press to inform the user about the function performed by that key, and in response to a double press, or to a second press of the same key shortly after the first press, to perform that function.

In other embodiments, the terminal may be a non-cash kiosk.

## Claims

1. A self-service terminal (10) having a user interface (16) comprising a plurality of user interface elements (18,20,22,24,26,28,29), **characterised in that** at least one user interface element has means (60) for detecting a user's hand in the vicinity of that element, and means (42,29) for informing the user about that element.

2. A terminal according to claim 1, wherein the informing means (42,29) describes a user interface element by reference to a type of module.

3. A terminal according to claim 1 or claim 2, wherein the detecting means (60) comprises a proximity sensor.

4. A terminal according to claim 1 or claim 2, wherein the detecting means (60) requires a user to touch a user interface element.

5. A terminal according to any preceding claim, wherein the informing means (42,29) comprises a loudspeaker (29) actuated by a controller (42).

6. A terminal according to claim 5, wherein the controller (42) includes pre-recorded sound files that are played through the loudspeaker (29).

7. A terminal according to claim 5, wherein the controller (42) includes a text to speech program and text files associated with the user interface elements.

8. A terminal according to any of claims 5 to 7, wherein the informing means (42,29) comprises a controller for displaying large text on a display (18).

9. A method of informing a user of a self-service terminal about a user interface element included in that terminal, the method comprising the steps of: detecting a user's hand in the vicinity of a user interface element; and informing the user about that user interface element.

10. A method according to claim 9, wherein the informing step includes the sub-steps of: detecting which user interface element the user's hand is in the vicinity of; selecting an audio file associated with that element; and playing the audio file.
